# EUROPÄISCHE PATENTSCHRIFT

(11) **EP 4 499 483 B1**
(45) Veröffentlichungstag und Bekanntmachung des Hinweises auf die Patenterteilung: **24.12.2025**
(21) Anmeldenummer: 24705444.8
(22) Anmeldetag: 14.02.2024
(51) Int. Cl.: B62D 1/04

(54) **VORRICHTUNG ZUR STÖRSICHEREN ERKENNUNG EINER BERÜHRUNG EINER LENKHANDHABE**
DEVICE FOR DISTURBANCE-FREE DETECTION OF CONTACT WITH A STEERING HANDLE
DISPOSITIF DE DÉTECTION SANS PERTURBATION DE CONTACT AVEC UNE POIGNÉE DE DIRECTION

(30) Priorität: 28.02.2023 DE 102023104913
(43) Veröffentlichungstag der Anmeldung: 05.02.2025
(73) Patentinhaber: Marquardt GmbH, 78604 Rietheim-Weilheim (DE)
(72) Erfinder: LEIBER, Christoph, 78194 Immendingen (DE); HAGGE, Robert, 78073 Bad Dürrheim (DE)
(74) Vertreter: Staeger & Sperling Partnerschaftsgesellschaft mbB
(86) Internationale Anmeldenummer: PCT/EP2024/053720
(87) Internationale Veröffentlichungsnummer: WO 2024/179840

(56) Entgegenhaltungen:
- DE-A1- 102019 120 136
- DE-T5- 112018 000 295

## Beschreibung

Die Erfindung betrifft eine Vorrichtung zur fehler- bzw. störsicheren Erkennung einer Berührung einer Oberfläche, insbesondere einer Oberfläche einer Lenkhandhabe eines Fahrzeugs.

Aus dem Stand der Technik ist eine Vielzahl von Oberflächen sowie Lenkhandhaben bekannt, an welchen eine Berührung erfasst werden soll.

Diese Systeme zur Berührungserkennung basieren oftmals auf einer durch die Berührung bedingten Kapazitäts- bzw. Impedanzänderung an einem stromdurchflossenen elektrischen Leiter.

Solcher Stand der Technik ist beispielsweise aus der die Merkmale des Oberbegriffes des unabhängigen Anspruch 1 offenbarenden DE102019120136A1 sowie weiter aus der DE112018000295T5 bekannt. Weiterhin offenbart die DE102019120136A1 in Bezug auf den unabhängigen Anspruch 10 ein Verfahren zur Berührungserkennung an einem Lenkrad, wobei Messwerte zumindest eines Berührungssensors erfasst werden.

Hierbei ist jedoch problematisch, dass auf den Sensor, welcher die Kapazitäts- bzw. Impedanzänderungen erfasst, bzw. auf einen Messpfad des Sensors auch Störeinflüsse wirken, sodass die erfassten Messwerte und damit die Bestimmung der Berührungserkennung verfälscht werden können.

Solche Störeinflüsse bzw. Störgrößen können beispielsweise elektromagnetische Felder sein, wie sie beispielsweise auch von Funksignalen hervorgerufen werden.

Entsprechend kann es dazu kommen, dass Berührungen erkannt werden, obwohl keine Berührung der Lenkhandhabe stattfindet oder umgekehrt, keine Berührung erkannt wird, obwohl die Lenkhandhabe von einem Nutzer berührt wird.

Dies ist besonders dann nachteilhaft, wenn die Berührungserkennung für Sicherheitsfunktionen genutzt wird, wie es beispielsweise in modernen Fahrzeugen verbreitet ist. So ist in Fahrzeugen beispielsweise eine Handerkennung an der Lenkhandhabe zu nennen, welche zum Zeitpunkt der Anmeldung oftmals für die Nutzung von autonomem bzw. automatisiertem Fahren vorgeschrieben ist.

Es ist daher wünschenswert, die Berührungserkennung zu verbessern und entsprechend robuster und weniger anfällig für Fehler auszugestalten.

Hierzu sind aus dem Stand der Technik bereits verschiedene Ansätze bekannt, welche jedoch teils weiter verbesserungsbedürftig sind.

Der Erfindung liegt deshalb die Aufgabe zugrunde, die vorgenannten Nachteile zu überwinden und eine Vorrichtung bereitzustellen, an und mit welcher eine Berührung insbesondere einer Lenkhandhabe durch einen Nutzer im Wesentlichen frei von Störeinflüssen erfasst werden kann.

Diese Aufgabe wird durch die Merkmalskombination gemäß Patentanspruch 1 gelöst.

Erfindungsgemäß wird daher eine Vorrichtung zur störsicheren Erkennung einer Berührung einer Lenkhandhabe durch einen Nutzer gemäß Anspruch 1 vorgeschlagen. Die Vorrichtung weist zumindest einem Berührungs-Sensor zur Berührungserkennung, zumindest einem Störgrößen-Sensor zur Störgrößenerfassung und einer Auswerteeinheit auf. Entsprechend kann der zumindest eine Berührungs-Sensor auch als Handerkennungssensor bezeichnet werden. Die Auswerteeinheit ist zum Beispiel über eine oder mehrere Mess-Schaltungen signaltechnisch mit den Sensoren, d.h. allen Berührungs-Sensoren und allen Störgrößen-Sensoren, verbunden und ausgebildet, aus von den Sensoren erfassten Messwerten eine um die Störgrößen bereinigten Wert zur Berührungserkennung zu bestimmen. Zur Bestimmung bereinigter Werte kann die Auswerteeinheit beispielsweise die Störgrößen, welche den Messwerten des Störgrößen-Sensors entsprechen, von den Messwerten des Berührungs-Sensors subtrahieren, welche eine Summe aus Störgrößen und den durch die Hand bzw. den durch die Berührung verursachten Signalen entsprechen. Statt einer einfachen Subtraktion können auch eine vektorielle Subtraktion oder weitere geeignete Operationen verwendet werden. Erfindungsgemäß ist ferner vorgesehen, dass der zumindest eine Störgrößen-Sensor jeweils zum Empfang von Frequenzen als Störgrößen ausgebildet ist. Obwohl die Störgrößen-Sensoren jeweils eine Vielzahl von Frequenzen als Störgrößen empfangen können, ist vorzugsweise vorgesehen, dass die Störgrößen-Sensoren jeweils zum Empfang einer vorbestimmten Frequenz als Störgröße oder zum Empfang eines Frequenzbandes d.h. einer Vielzahl von Frequenzen mit einer darin liegenden vorbestimmten Frequenz als Störgröße ausgebildet sind. Dabei ist der zumindest eine Störgrößen-Sensor insbesondere als Antennenleitung und weiter insbesondere als offene oder einseitig offene Antennenleitung ausgebildet.

Eine vorteilhafte Variante der Erfindung sieht dabei vor, dass eine Vielzahl von Störgrößen-Sensoren zum Empfang einer Vielzahl von Frequenzen als Störgrößen vorgesehen ist, sodass also verschiedene Frequenzen bzw. verschiedene Frequenzbänder erfasst und verschiedene Störgrößen berücksichtigt werden können. Dabei ist vorzugsweise je Frequenz bzw. je Frequenzband genau ein Störgrößen-Sensor vorgesehen. Entsprechend sind die Störgrößen-Sensoren jeweils zum Empfang einer jeweiligen vorbestimmten Frequenz als Störgröße oder zum Empfang eines vorbestimmten Frequenzbandes mit vorbestimmten Frequenzen als Störgrößen ausgebildet. Obgleich die unterschiedlichen Störgrößen-Sensoren vorzugsweise jeweils ausgebildet sind, ein Frequenzband mit einer darin liegenden vorbestimmten Frequenz als Störgröße zu erfassen, sodass sich also die vorbestimmten als Störgrößen zu erfassenden Frequenzen der Störgrößen-Sensoren unterscheiden, können die Frequenzbänder einander überlappen.

Eine Variante der Erfindung sieht zudem vor, dass der zumindest eine Störgrößen-Sensor oder zumindest ein Teil der Störgrößen-Sensoren jeweils als eine separate Antennenstruktur ausgebildet ist.

Hierbei kann die separate Antennenstruktur eine auf eine Leiterplatte aufgebrachte oder in eine Leiterplatte geätzte elektrisch leitende Struktur mit einer vorbestimmten und/oder auf eine als Störgröße zu empfangende Frequenz angepassten Länge sein. Bei der Leiterplatte handelt es sich vorzugsweise um eine Leiterplatte, auf welcher auch die Auswerteeinheit angeordnet ist, sodass die separate Antennenstruktur kostengünstig und platzsparend an der Auswerteeinheit ausgebildet sein kann und mit dieser in eine gemeinsame Baueinheit integriert ist. Weiter kann die Antennenstruktur einen vorbestimmten auf den Empfang der für sie vorbestimmten Frequenz optimierten und beispielsweise mäanderförmigen Verlauf aufweisen. Typisch für eine Antenne kann die Struktur einseitig offen d.h. eine Seite der leitenden Struktur elektrisch nicht mit weiteren Komponenten verbunden sein.

Ähnlich der im Weiteren genannten alternativen Ausführungsform, kann jedoch auch bei der Antennenstruktur ein Schaltelement zum Freischalten der elektrisch leitenden Struktur vorgesehen sein.

Eine alternative Variante zu der separaten Antennenstruktur, welche jedoch auch mit dieser kombiniert werden kann, sieht vor, dass der zumindest eine Störgrößen-Sensor oder zumindest ein Teil der Störgrößen-Sensoren jeweils integral durch eine freischaltbare elektrische Leitung einer in die Lenkhandhabe integrierten bzw. integrierbaren Elektronikkomponente gebildet ist. Bei der Elektronikkomponente kann es sich insbesondere um einen weiteren Sensor und weiter insbesondere um einen Temperatursensor handeln, welcher beispielsweise für die Steuerung einer Heizung der Lenkhandhabe ohnehin in diese integriert ist.

Auch die Elektronikkomponente bzw. der weitere Sensor und insbesondere der Temperatursensor kann signaltechnisch und wiederum beispielsweise über einen oder mehrere Mess-Schaltungen mit der Auswerteeinheit verbunden sein, sodass die Auswerteeinheit einerseits die Messwerte des weiteren Sensors / des Temperatursensors und andererseits die Messwerte des durch die freischaltbare elektrische Leitung gebildeten Störgrößen-Sensors erfassen und/oder auswerten kann.

Weiter kann vorgesehen sein, dass die freischaltbare elektrische Leitung zumindest abschnittsweise in einem Griffbereich bzw. einem Lenkradkranz der Lenkhandhabe verläuft, sodass sich die Leitung nicht hinter dem Airbag oder anderen abschirmenden Elementen befindet, sondern nach außen an den Lenkradkranz verläuft und von den Störungen bzw. Störfrequenzen weniger stark abgeschirmt ist.

In Kombination mit der freischaltbaren elektrischen Leitung kann die Vorrichtung zudem zumindest ein Schaltelement umfassen, durch welches die freischaltbare elektrische Leitung derart freischaltbar ist, dass die Leitung einseitig offen ist und/oder eine vorbestimmte und auf eine als Störgröße zu empfangende Frequenz angepasste Länge aufweist. Das zumindest eine Schaltelement kann hierfür durch die Auswerteeinheit ansteuerbar sein. Ferner kann die Auswerteeinheit auch über ein Schaltelement mit der freischaltbaren elektrischen Leitung verbindbar oder von ihr trennbar sein.

Die Elektronikkomponente kann zum Betrieb der Elektronikkomponente über die freischaltbare elektrische Leitung mit einer Versorgungsspannung bzw. einer Spannungsquelle und/oder einer Masse verbunden und die Leitung zum Betrieb bzw. zur Verwendung als Störgrößen-Sensor durch das zumindest eine Schaltelement von der Versorgungsspannung bzw. der Spannungsquelle und/oder der Masse trennbar und potentialfrei schaltbar sein. Entsprechend kann die Versorgungsspannung und/oder die Masse von der freischaltbaren elektrischen Leitung abgetrennt werden, sodass diese als ein Störgrößen-Sensor verwendbar ist.

Die freischaltbare elektrische Leitung kann dabei auch in mehrere Teilstücke getrennt sein, welche jeweils durch ein weiteres Schaltelement voneinander getrennt sind, sodass die Teilstücke jeweils als ein Störgrößen-Sensor oder mehrere Teilstücke gemeinsam als ein Störgrößen-Sensor verwendbar sind. Jedes der Teilstücke kann dabei insbesondere durch eine jeweils dafür angepasste Länge oder einen dafür angepassten Verlauf ausgebildet sein, eine vorbestimmte Frequenz als Störgröße oder ein vorbestimmtes Frequenzband mit einer darin liegenden Frequenz als Störgröße zu empfangen. Jedes der Teilstücke kann dann signaltechnisch mit der Auswerteeinheit bzw. einer Messschaltung der Auswerteeinheit verbunden sein.

Entsprechend kann die die Auswerteeinheit ausgebildet sein, das zumindest eine Schaltelement vor einer Erfassung und Auswertung der Messwerte des zumindest einen Störgrößen-Sensors, den zumindest einen Störgrößen-Sensor freischaltend anzusteuern. Nach und vorzugsweise unmittelbar nach der Erfassung der Messwerte kann die freischaltbare elektrische Leitung wieder mit der Versorgungsspannung und/oder der Masse verbunden werden.

Die Auswerteeinheit kann zudem ausgebildet sein, die Messwerte der Sensoren zeitlich parallel zu erfassen. Hierfür kann die Auswerteeinheit mit mehreren Mess-Schaltungen bzw. Mess-ICs verbunden sein oder diese aufweisen, wobei jedem Sensor beispielsweise je ein Mess-IC zugeordnet ist. Das führt aufgrund der Vielzahl von Mess-ICs jedoch zu einem erhöhten Bauraumbedarf und höheren Kosten. Daher kann alternativ vorgesehen sein, dass die Auswerteeinheit ausgebildet ist, die Messwerte der Sensoren zeitlich sequenziell d.h. nacheinander zu erfassen. Hierfür kann die Auswerteeinheit mit einem einzelnen bzw. genau einem Mess-IC d.h. einer MessSchaltung verbunden sein oder diese aufweisen, welche die Messwerte der Sensoren entsprechend nacheinander erfasst. Um jedoch zu gewährleisten, dass eine zum Zeitpunkt der Erfassung der Messwerte des zumindest einen Berührungs-Sensors vorliegende Störung korrekt mit dem zumindest einen Störgrößen-Sensor erfasst werden kann, ist hierbei vorgesehen, dass die Auswerteeinheit zudem ausgebildet ist, nach der Erfassung des Messwerts des zumindest einen Berührungs-Sensors zeitlich unmittelbar den Messwert des zumindest einen Störgrößen-Sensors zu erfassen.

Sind mehrere Berührungs-Sensoren vorhanden, kann auch vorgesehen sein, dass jeweils zunächst die Messwerte eines einzelnen Berührungs-Sensors und anschließend nacheinander die Messwerte eines, aller oder mehrerer Störgrößen-Sensoren erfasst werden.

Ein Aspekt der Erfindung betrifft zudem eine Lenkhandhabe mit einer darin integrierten oder einer damit verbundenen erfindungsgemäßen Vorrichtung bzw. ein System aus Lenkhandhabe und einer erfindungsgemäßen Vorrichtung.

Weiter betrifft ein Aspekt der Erfindung ein Verfahren zur Bestimmung bereinigter Werte zur Berührungserkennung mit einer erfindungsgemäßen Vorrichtung. Gemäß dem Verfahren werden die Messwerte des zumindest einen Berührungs-Sensors erfasst sowie insbesondere zeitlich unmittelbar nachfolgend die Messwerte des zumindest einen Störgrößen-Sensors erfasst. Aus den Messwerten der Sensoren d.h. der Berührungs-Sensoren und der Störgrößen-Sensoren wird anschließend ein bereinigter Wert bestimmt. Die Bestimmung des bereinigten Werts bzw. der bereinigten Werte kann hierbei insbesondere durch Subtraktion und weiter insbesondere vektorielle Subtraktion der Messwerte der Störgrößen-Sensoren von den Messwerten der Berührungs-Sensoren erfolgen.

Die vorstehend offenbarten Merkmale sind beliebig kombinierbar, soweit dies technisch möglich ist und diese nicht im Widerspruch zueinander stehen. Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
Fig. 1 ein System aus einer Lenkhandhabe und einer Vorrichtung;
Fig. 2 ein Ablaufdiagramm zur Erfassung der Messwerte der Sensoren.

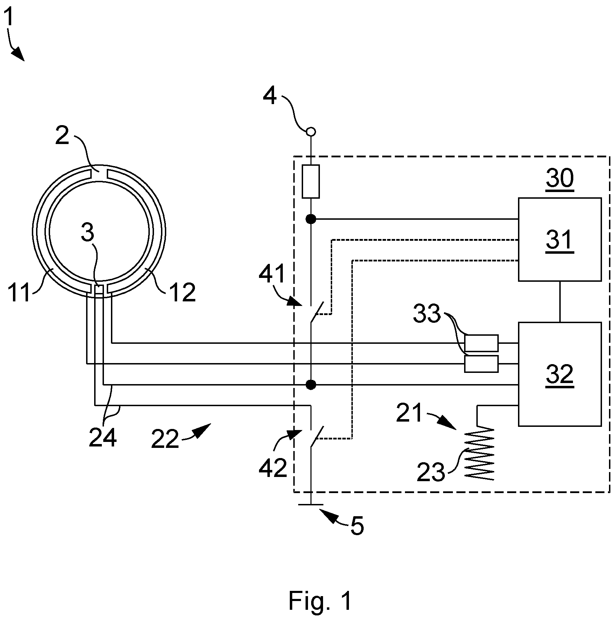

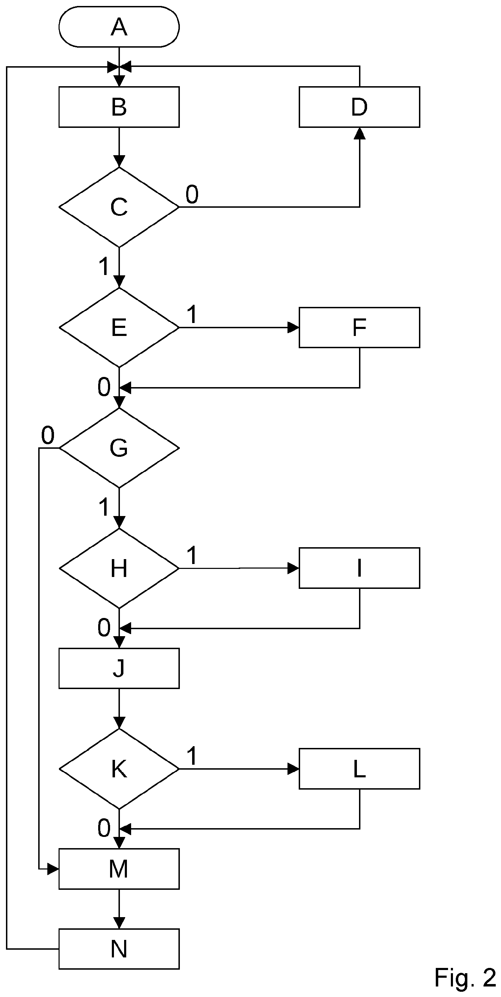

Figur 1 zeigt beispielhaft schematisch ein System aus einer Lenkhandhabe 2 und einer erfindungsgemäßen Vorrichtung 1. Figur 2 zeigt ein Verfahren zur Bestimmung bereinigter Werte mit einer erfindungsgemäßen Vorrichtung 1, wie sie beispielsweise in Figur 1 dargestellt ist. Dabei ist die Darstellung des Verfahrens gemäß Figur 2 an ein Ablaufdiagramm angelehnt.

Die Vorrichtung 1 in Figur 1 umfasst vorliegend zwei Berührungs-Sensoren 11, 12, welche in die Lenkhandhabe 2 integriert sind, zwei Störgrößen-Sensoren 21, 22 sowie eine Auswertemodul 30. Alle Sensoren 11, 12, 21, 22 sind mit dem Auswertemodul 30 bzw. einer Messschaltung 32 des Auswertemoduls 30 sowie über die Messschaltung 32 mit einer Auswerteeinheit 31 des Auswertemoduls 30 verbunden. Obgleich die Auswerteeinheit 31 und die Messschaltung 32 als zwei Bauteile dargestellt sind, können diese alternativ integral durch eine Baueinheit gebildet sein.

Dabei sind die beiden Berührungs-Sensoren 11, 12 jeweils über ein Filterelement 33 und die beiden Störgrößen-Sensoren 21, 22 ohne ein Filterelement bzw. direkt mit der Messschaltung 32 verbunden.

Die Messschaltung 32, welche als Mess-IC vorgesehen sein kann, weist entsprechend für jeden der Sensoren 11, 12, 21, 22 einen Eingang auf, kann die Sensoren 11, 12, 21, 22 jedoch vorliegend nicht gleichzeitig, sondern nur nacheinander d.h. sequenziell auswerten, sodass die Messschaltung 32 die Eingänge durchschaltet bzw. nacheinander auswertet.

Vorliegend ist vorgesehen, dass ein erster Störgrößen-Sensor 21 als eine separate Antennenstruktur ausgebildet ist. Zur Bauraum- und Kostenreduktion ist die Antennenstruktur bzw. der erste Störgrößen-Sensor 21 als eine auf die Leiterplatte des Auswertemoduls 30 aufgebrachte leitende Struktur 23 ausgebildet. Die leitende Struktur 23 ist dabei bezüglich ihrer Länge auf eine bestimmte zu empfangende Frequenz als Störgröße angepasst.

Da auch die Messschaltung 32 und die Auswerteeinheit 31 des Auswertemoduls 30 jeweils als IC auf der Leiterplatte angeordnet sind, kann das Auswertemodul 30 als kompakte Einheit bereitgestellt werden.

Weiter ist ein zweiter Störgrößen-Sensor 22 vorgesehen, welcher integral durch eine freischaltbare elektrische Leitung 24 gebildet wird, welche zugleich eine Versorgungsleitung einer in der Lenkhandhabe 2 angeordneten Elektronikkomponente 3 ist. Bei der Elektronikkomponente 3 handelt es sich vorliegend um einen Temperatursensor einer Heizung der Lenkhandhabe 2, welcher über die Versorgungsleitung mit einer Spannungsquelle 4 und einer Masse 5 verbunden ist.

Da die Versorgungsleitung der Elektronikkomponente 3 als offene Antennenleitung zum Empfang einer vorbestimmten Frequenz als Störgröße genutzt werden soll, sind vorliegend zwei Schaltelemente 41, 42 vorgesehen, wobei ein erstes Schaltelement 41 die freischaltbare elektrische Leitung 24 von der Spannungsquelle 4 und ein zweites Schaltelement 42 die freischaltbare elektrische Leitung 24 von der Masse 5 trennt, d.h. freischaltet. Dabei ist vorgesehen, dass die Schaltelemente 41, 42 derart angeordnet sind und die Versorgungsleitung derart auftrennen, dass die freischaltbare elektrische Leitung 24, welche den zweiten Störgrößen-Sensor 22 bildet, eine vorbestimmte Länge hat und entsprechend ebenfalls zum Empfang einer vorbestimmten Frequenz geeignet ist.

Die beiden Störgrößen-Sensoren 21, 22 sind jedoch auf zwei verschiedene vorbestimmte Frequenzen als Störgrößen angepasst, sodass entsprechend verschiedene Störfrequenzen bzw. Störgrößen berücksichtigt werden können.

Zur Bestimmung der bereinigten Werte, ist die Auswerteeinheit 31 des Auswertemoduls 30 mit der Messschaltung 32 verbunden, sodass die von der Messschaltung 32 erfassten Messwerte der Sensoren 11, 12, 21, 22 an die Auswerteeinheit 31 übermittelt werden können. Vor der Erfassung der Messwerte steuert die Auswerteeinheit 31 die Schaltelemente 41, 42 derart an, dass diese die freischaltbare elektrische Leitung 24 zur Verwendung als Störgrößen-Sensor 22 freischalten. Nach der Erfassung der Messwerte des Störgrößen-Sensors 22 können die Schaltelemente 41, 42 den Temperatursensor 3 wieder mit der Spannungsquelle 4 und der Masse 5 verbindend angesteuert werden.

In Figur 2 ist beispielhaft ein Verfahren zur Bestimmung bereinigter Werte dargestellt. Dieses umfasst die folgenden Schritte:
- A: Start
- B: Erfassen der Messwerte aller Berührungs-Sensoren 11, 12 (Erfassen der Messwerte des i-ten Berührungs-Sensors)
- C: Wurden alle Berührungs-Sensoren ausgelesen bzw. deren Messwerte erfasst? Nein → Weiter zu Schritt D; Ja → Weiter zu Schritt E
- D: Zähler i erhöhen bzw. die Messwerte des nächsten Berührungs-Sensors 11, 12 erfassen
- E: Ist (zumindest) ein als separate Antennenstruktur auf der Leiterplatte ausgebildeter Störgrößen-Sensor 21 vorhanden? Nein → Weiter zu Schritt G; Ja → Weiter zu Schritt F
- F: Erfassen der Messwerte der als separate Antennenstruktur auf der Leiterplatte ausgebildeten Störgrößen-Sensoren 21
- G: Ist (zumindest) ein als integral durch eine freischaltbare elektrische Leitung 24 ausgebildeter Störgrößen-Sensor 22 vorhanden? Nein → Weiter zu Schritt M; Ja → Weiter zu Schritt H
- H: Sind Schaltelemente 41, 42 zum Freischalten der elektrischen Leitung 24 vorhanden? Nein → Weiter zu Schritt J; Ja → Weiter zu Schritt I
- I: Ansteuern der Schaltelemente 41, 42, sodass die Leitung 24 freigeschaltet ist.
- J: Erfassen der Messwerte der als integral durch eine freischaltbare elektrische Leitung 24 ausgebildeten Störgrößen-Sensoren 22
- K: Sind Schaltelemente 41, 42 zum Freischalten der elektrischen Leitung 24 vorhanden? Nein → Weiter zu Schritt M; Ja → Weiter zu Schritt L
- L: Ansteuern der Schaltelemente 41, 42, sodass die Leitung 24 mit der Spannungsquelle 4 und der Masse 5 verbunden ist.
- M: Bestimmen der bereinigten Werte durch Subtraktion der Messwerte der Störgrößen-Sensoren 21, 22 von den Messwerten der Berührungs-Sensoren 11, 12.
- N: Warten auf erneute Messanfrage / auf nächsten Messslot

## Patentansprüche

1. Vorrichtung (1) zur störsicheren Erkennung einer Berührung einer Lenkhandhabe (2) durch einen Nutzer,
mit zumindest einem Berührungs-Sensor (11, 12) zur Berührungserkennung, **gekennzeichnet durch** zumindest einem Störgrößen-Sensor (21, 22) zur Störgrößenerfassung und einer Auswerteeinheit (31), welche signaltechnisch mit den Sensoren (11, 12, 21, 22) verbunden und ausgebildet ist, aus von den Sensoren (11, 12, 21, 22) erfassten Messwerten eine um die Störgrößen bereinigten Wert zur Berührungserkennung zu bestimmen,
wobei der zumindest eine Störgrößen-Sensor (21, 22) jeweils zum Empfang von Frequenzen als Störgrößen ausgebildet ist.

2. Vorrichtung nach Anspruch 1,
wobei eine Vielzahl von Störgrößen-Sensoren (21, 22) zum Empfang einer Vielzahl von Frequenzen als Störgrößen vorgesehen ist, wobei die Störgrößen-Sensoren jeweils zum Empfang einer jeweiligen vorbestimmten Frequenz als Störgröße oder zum Empfang eines vorbestimmten Frequenzbandes mit vorbestimmten Frequenzen als Störgrößen ausgebildet sind.

3. Vorrichtung nach Anspruch 1 oder 2
wobei zumindest ein Störgrößen-Sensor (21) als eine separate Antennenstruktur ausgebildet ist.

4. Vorrichtung nach dem vorhergehenden Anspruch,
wobei die separate Antennenstruktur eine auf eine Leiterplatte aufgebrachte oder in eine Leiterplatte geätzte elektrisch leitende Struktur (23) mit einer vorbestimmten und/oder auf eine als Störgröße zu empfangende Frequenz angepassten Länge ist.

5. Vorrichtung nach einem der vorhergehenden Ansprüche,
wobei zumindest ein Störgrößen-Sensor (22) integral durch eine freischaltbare elektrische Leitung (24) einer in die Lenkhandhabe (2) integrierten Elektronikkomponente (3) gebildet ist.

6. Vorrichtung nach dem vorhergehenden Anspruch,
ferner umfassend zumindest ein Schaltelement (41, 42) durch welches die freischaltbare elektrische Leitung (24) derart freischaltbar ist, dass die Leitung (24) einseitig offen ist und eine vorbestimmte und/oder auf eine als Störgröße zu empfangende Frequenz angepasste Länge aufweist.

7. Vorrichtung nach dem vorhergehenden Anspruch,
wobei die Elektronikkomponente (3) zum Betrieb der Elektronickomponente (3) über die freischaltbare elektrische Leitung (24) mit einer Spannungsquelle (4) und/oder einer Masse (5) verbunden und die Leitung (24) zum Betrieb als Störgrößen-Sensor (22) durch das zumindest eine Schaltelement (41, 42) von der Spannungsquelle (4) und/oder der Masse (5) trennbar und potentialfrei schaltbar ist.

8. Vorrichtung nach einem der beiden vorhergehenden Ansprüche,
wobei die Auswerteeinheit (31) ausgebildet ist, das zumindest eine Schaltelement (41, 42) vor einer Erfassung und Auswertung der Messwerte des zumindest einen Störgrößen-Sensors (22), den zumindest einen Störgrößen-Sensor (22) freischaltend anzusteuern.

9. Vorrichtung nach einem der vorhergehenden Ansprüche,
wobei die Auswerteeinheit (31) ausgebildet ist, die Messwerte der Sensoren (11, 12, 21, 22) zeitlich parallel zu erfassen,
oder wobei die Auswerteeinheit (31) ausgebildet ist, die Messwerte der Sensoren (11, 12, 21, 22) zeitlich sequenziell zu erfassen und nach der Erfassung des Messwerts des zumindest einen Berührungs-Sensors (11, 12) zeitlich unmittelbar den Messwert des zumindest einen Störgrößen-Sensors (21, 22) zu erfassen.

10. Verfahren zur Bestimmung bereinigter Werte zur Berührungserkennung mit einer Vorrichtung (1) nach einem der vorhergehenden Ansprüche,
wobei die Messwerte des zumindest einen Berührungs-Sensors (11, 12) erfasst werden,
wobei die Messwerte des zumindest einen Störgrößen-Sensors (21, 22) erfasst werden,
und wobei aus den Messwerten der Sensoren (11, 12, 21, 22) ein bereinigter Wert zur Berührungserkennung bestimmt wird.

## Claims

1. A device (1) for failsafe detection of the touching of a steering handle (2) by a user,
with at least one touch sensor (11, 12) for touch detection, **characterized by** at least one disturbance sensor (21, 22) for disturbance detection and an evaluation unit (31) which is signally connected to the sensors (11, 12, 21, 22) and designed to determine a value for touch detection from measured values acquired by the sensors (11, 12, 21, 22) that is free of disturbances,
wherein at least one disturbance sensor (21, 22) is designed to receive frequencies as disturbances.

2. The device according to claim 1,
wherein a plurality of disturbance sensors (21, 22) is provided for receiving a plurality of frequencies as disturbances, wherein the disturbance sensors are each designed to receive a respective predetermined frequency as a disturbance or to receive a predetermined frequency band with predetermined frequencies as disturbances.

3. The device according to claim 1 or 2,
wherein at least one disturbance sensor (21) is embodied as a separate antenna structure.

4. The device according to the preceding claim,
wherein the separate antenna structure is an electrically conductive structure (23) which is disposed on or etched into a printed circuit board and has a predetermined length and/or a length that is adapted to a frequency to be received as a disturbance.

5. The device according to any one of the preceding claims,
wherein at least one disturbance sensor (22) is formed integrally by a disconnectable electrical line (24) of an electronic component (3) integrated into the steering handle (2).

6. The device according to the preceding claim,
further comprising at least one switching element (41, 42) by which the disconnectable electrical line (24) can be disconnected in such a way that the line (24) is open on one side and has a predetermined length and/or a length that is adapted to a frequency to be received as a disturbance.

7. The device according to the preceding claim,
wherein the electronic component (3) is connected to a voltage source (4) and/or to a ground (5) via the disconnectable electrical line (24) for the operation of the electronic component (3) and the line (24) can be disconnected from the voltage source (4) and/or from the ground (5) and switched without potential by the at least one switching element (41, 42) for operation as a disturbance sensor (22).

8. The device according to any one of the preceding claims,
wherein the evaluation unit (31) is designed to actuate the at least one switching element (41, 42) before the measured values of the at least one disturbance sensor (22) are acquired and evaluated so as to disconnect the at least one disturbance sensor (22).

9. The device according to any one of the preceding claims,
wherein the evaluation unit (31) is designed to acquire the measured values of the sensors (11, 12, 21, 22) parallel in time, or wherein the evaluation unit (31) is designed to acquire the measured values of the sensors (11, 12, 21, 22) sequentially in time and, after acquiring the measured value of the at least one touch sensor (11, 12), immediately acquires the measured value of the at least one disturbance sensor (21, 22).

10. A method for determining adjusted values for touch detection with a device (1) according to any one of the preceding claims,
wherein the measured values of at least one touch sensor (11, 12) are acquired,
wherein the measured values of at least one disturbance sensor (21, 22) are acquired,
and wherein an adjusted value for touch detection is determined from the measured values of the sensors (11, 12, 21, 22).

## Revendications

1. Dispositif (1) pour la détection sans perturbation de contact avec une poignée de direction (2) par un utilisateur,
avec au moins un capteur tactile (11, 12) pour la détection tactile, **caractérisé par** au moins un capteur de perturbation (21, 22) pour la détection de perturbation et une unité d'évaluation (31) qui est reliée aux capteurs (11, 12, 21, 22) et conçue pour déterminer, à partir des valeurs mesurées détectées par les capteurs (11, 12, 21, 22), une valeur corrigée de perturbation pour la détection tactile,
dans lequel l'au moins un capteur de perturbation (21, 22) est conçu pour recevoir des fréquences en tant que perturbations.

2. Dispositif selon la revendication 1,
dans lequel une pluralité de capteurs de perturbation (21, 22) sont prévus pour recevoir une pluralité de fréquences comme perturbations, chaque capteur de perturbation étant configuré pour recevoir une fréquence prédéterminée respective comme perturbation ou pour recevoir une bande de fréquences prédéterminée avec des fréquences prédéterminées comme perturbations.

3. Dispositif selon la revendication 1 ou 2,
dans lequel au moins un capteur de perturbation (21) est conçu comme une structure d'antenne séparée.

4. Dispositif selon la revendication précédente,
dans lequel la structure d'antenne distincte est une structure conductrice (23) appliquée ou gravée sur un circuit imprimé, présentant une longueur prédéterminée et/ou une longueur adaptée à la fréquence de réception du signal d'interférence.

5. Dispositif selon l'une quelconque des revendications précédentes,
dans lequel au moins un capteur d'interférence (22) est constitué d'une ligne électrique commutable (24) d'un composant électronique (3) intégré à la poignée de direction (2).

6. Dispositif selon la revendication précédente,
comprenant en outre au moins un élément de commutation (41, 42) permettant de commuter la ligne électrique commutable (24) de sorte que celle-ci soit ouverte à une extrémité et présente une longueur prédéterminée et/ou une longueur adaptée à la fréquence de réception du signal d'interférence.

7. Dispositif selon la revendication précédente,
dans lequel le composant électronique (3) est connecté à une source de tension (4) et/ou à la masse (5) via la ligne électrique commutable (24) pour son fonctionnement, et la ligne électrique commutable (24) peut être déconnectée de la source de tension (4) et/ou de la masse (5) et commutée sans potentiel par au moins un élément de commutation (41, 42) pour fonctionner comme capteur de perturbation (22).

8. Dispositif selon l'une quelconque des deux revendications précédentes,
dans lequel l'unité d'évaluation (31) est configurée pour commander au moins un élément de commutation (41, 42) de manière à désactiver l'au moins un capteur de perturbation (22) avant la détection et l'évaluation des valeurs mesurées par l'au moins un capteur de perturbation (22).

9. Dispositif selon l'une quelconque des revendications précédentes,
dans lequel l'unité d'évaluation (31) est configurée pour enregistrer les valeurs mesurées par les capteurs (11, 12, 21, 22) en parallèle dans le temps, ou dans lequel l'unité d'évaluation (31) est configurée pour enregistrer les valeurs mesurées par les capteurs (11, 12, 21, 22) de manière séquentielle dans le temps et, après la détection de la valeur mesurée de l'au moins un capteur de contact (11, 12), détecter immédiatement dans le temps la valeur mesurée de l'au moins un capteur de perturbation (21, 22).

10. Procédé pour déterminer des valeurs corrigées pour la détection de contact à l'aide d'un dispositif (1) selon l'une quelconque des revendications précédentes,
dans lequel les valeurs mesurées par l'au moins un capteur de contact (11, 12) sont enregistrées,
dans lequel les valeurs mesurées par l'au moins un capteur de perturbation (21, 22) sont enregistrées,
et une valeur corrigée pour la détection de contact est déterminée à partir des valeurs mesurées par les capteurs (11, 12, 21, 22).
